Europäisches Patentamt

European Patent Office

Office européen des brevets

(19)

(11) **EP 0 991 855 B1**

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.⁷: **F02B 37/18**, F02B 37/22, F02B 37/24

(21) Anmeldenummer: **98937485.5**

(22) Anmeldetag: **16.06.1998**

(86) Internationale Anmeldenummer:
**PCT/EP98/03613**

(87) Internationale Veröffentlichungsnummer:
**WO 99/00589 (07.01.1999 Gazette 1999/01)**

(54) **BRENNKRAFTMASCHINEN-TURBOLADER-SYSTEM**

TURBOCHARGER SYSTEM FOR INTERNAL COMBUSTION ENGINES

SYSTEME TURBOCOMPRESSEUR POUR MOTEURS A COMBUSTION INTERNE

(84) Benannte Vertragsstaaten:
**AT CH DE FR GB IT LI SE**

(30) Priorität: **26.06.1997 DE 19727141**

(43) Veröffentlichungstag der Anmeldung:
**12.04.2000 Patentblatt 2000/15**

(73) Patentinhaber: **DaimlerChrysler AG**
**70546 Stuttgart (DE)**

(72) Erfinder:
 • **SCHMIDT, Erwin**
 **D-73666 Baltmannsweiler (DE)**
 • **SUMSER, Siegfried**
 **D-70184 Stuttgart (DE)**

(56) Entgegenhaltungen:
 **DE-C- 4 232 400** **US-A- 4 474 006**
 **US-A- 4 809 509**

 • **PATENT ABSTRACTS OF JAPAN vol. 013, no. 318 (M-852), 19. Juli 1989 & JP 01 104925 A (ISHIKAWAJIMA HARIMA HEAVY IND CO LTD), 21. April 1989**

Bemerkungen:
 Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Brennkraftmaschinen-Turbolader-System gemäß dem Oberbegriff des Anspruches 1.

Brennkraftmaschinen-Turbolader-Systeme der vorgenannten Art sind beispielsweise aus der DE 42 32 400 C1 bekannt. In den ringdüsenförmigen, vom Strömungskanal ausgehenden und auf das Turbinenrad ausmündenden Bereich ist dort ein ringförmiger Einsatz axial einschiebbar, der teilweise als Leitapparat ausgebildet ist und Leitschaufeln unterschiedlicher Anstellung aufweist, die in Abhängigkeit von der axialen Einstellage des ringförmigen Einsatzes zum Einsatz gebracht werden. Ferner weist der ringförmige, durch ein verschiebbares, rohrförmiges Hülsenteil gebildete Einsatz einen Axialbereich auf, der für den Bremsbetrieb als Sperrvorrichtung in axiale Überdeckung zum ringdüsenförmigen Eintrittsbereich gebracht wird und der bezogen auf seinen Durchtrittsquerschnitt so bemessen ist, daß er für das Abgas als Drossel den engsten, im Bremsbetrieb nicht veränderlichen Strömungsquerschnitt im Übergang auf das Turbinenrad bestimmt. Es lassen sich auf diese Weise hohe Bremsleistungen erzielen, es bereitet aber Schwierigkeiten, diese Bremsleistungen bei geringer thermischer Belastung der Brennkraftmaschine zu realisieren, insbesondere auch in geeigneter Zuordnung zur Drehzahl und über einem ausreichend breiten Drehzahlband, so daß insgesamt Schwierigkeiten bestehen, eine entsprechende Abstimmung zwischen Brennkraftmaschine und Turbolader zu finden, die diesen Forderungen gerecht wird.

Durch die Erfindung soll ein Brennkraftmaschinen-Turbolader-System geschaffen werden, das die für den Bremsbetrieb angestrebten hohen Bremsleistungen in geeigneter Zuordnung zu den für den Fahrbetrieb wesentlichen Drehzahlen des Motors bei relativ niedrigen thermischen Belastungen ermöglichen soll.

Erreicht wird dies bei Brennkraftmaschinen-Turbolader-Systemen durch eine Ausgestaltung gemäß den Merkmalen des Anspruches 1, durch die die Turbine in ihren Hauptparametern in Bezug auf das Gesamt-Hubvolumen der Brennkraftmaschine derart festgelegt ist, daß maximale Bremsleistungen ermöglicht werden, und zwar bei vergleichsweise geringer thermischer Belastung der Brennkraftmaschine und in einem für den Betrieb von Nutzfahrzeugen geeigneten, hinreichend breiten Drehzahlbereich.

Hierbei gilt die Beziehung

$$TBF = A_T \times \frac{D_T}{V_H},$$

wobei mit $A_T$ der bei maximaler Bremsleistung durch Sperrvorrichtung als Festdrossel und Abblaseventil freigegebene Strömungsquerschnitt im Abgasweg zur Turbine bezeichnet ist, mit $D_T$ der Eintrittsdurchmesser des Turbinenrades und mit $V_H$ das Hubvolumen der Brennkraftmaschine. TBF bildet einen Turbo-Brems-Faktor, der im Rahmen der Erfindung kleiner als 0,005 (5 ‰) ist und der bevorzugt bei 0,001 bis 0,003 (1-3 ‰) liegt.

Bezogen auf den Auslegungspunkt der maximalen Bremsleistung ist im Rahmen der Erfindung der bei maximaler Bremsleistung freigegebene Strömungsquerschnitt im Abgasweg zur Turbine gebildet durch einen einen unteren Drehzahlbereich abdeckenden von der Sperrvorrichtung im Übergang auf die Turbine freigegebenen Querschnittsanteil und einen variablen Querschnittsanteil, der gegen den Auslegungspunkt maximaler Bremsleistung größer wird und der durch den vom Abblaseventil freigegebenen Abströmquerschnitt gebildet wird. Das Verhältnis des zusätzlichen, variablen und gegen die maximale Bremsleistung anwachsenden Querschnittsanteiles, der dem vom Abblaseventil freigegebenen Abströmquerschnitt entspricht, zu dem von der Sperrvorrichtung freigegebenen Querschnittsanteil ist für den Auslegungspunkt maximaler Bremsleistung im Rahmen der Erfindung größer 0,2, und liegt bevorzugt im Bereich zwischen 0,2 und 1. Bei kleiner Verhältniszahl ist die Bremsleistung im unteren Drehzahlbereich verhältnismäßig klein und wächst im oberen Drehzahlbereich verhältnismäßig steil an; bei großer Verhältniszahl ergibt sich eine höhere Bremsleistung schon im unteren Drehzahlbereich mit einem, im Vergleich zu kleineren Verhältniszahlen, flacheren Anstieg der Bremsleistung gegen den Punkt maximaler Bremsleistung als Auslegungspunkt. Bezogen auf das Drehzahlband des Motores beginnt der obere Drehzahlbereich, in dem der zusätzliche, variable, vom Abblaseventil bestimmte Abströmquerschnitt freigegeben ist, bei etwa 2/3 bis 3/4 der bei maximaler Bremsleistung gegebenen Drehzahl, wobei die Drehzahl, die bei maximaler Bremsleistung gegeben ist, in einem Bereich liegt, der um etwa 1/4 bis 1/3 größer als die Nenndrehzahl der Brennkraftmaschine ist, also die Drehzahl bei maximaler Leistung der Brennkraftmaschine.

Weitere Einzelheiten und Merkmale der Erfindung ergeben sich aus den Ansprüchen. Femer wird die Erfindung nachfolgend anhand von Zeichnungen noch näher erläutert, wobei

Figur 1    einen Schnitt durch einen Turbolader, in schematisierter Darstellung, zeigt,

Figur 2    eine Schnittdarstellung gemäß Linie II-II in Figur 1, die die als Leitapparat ausgebildete Sperrvorrichtung zeigt,

Figur 3    in vergrößerter Schnittdarstellung, stark schematisiert, die Anordnung und Ausbildung eines Abblaseventiles zeigt, und in

Figur 4    eine schematisierte Prinzipdarstellung gezeigt ist, bei der der grundsätzliche Verlauf der Bremsleistung über der Motordrehzahl bei unterschiedlichen Verhältnissen von variablem, bei maximaler Bremsleistung zusätzlich freigegebenem Abströmquerschnitt zu bei geschlossener Sperrvorrichtung gegebenen Strömungsquerschnitt dargestellt ist.

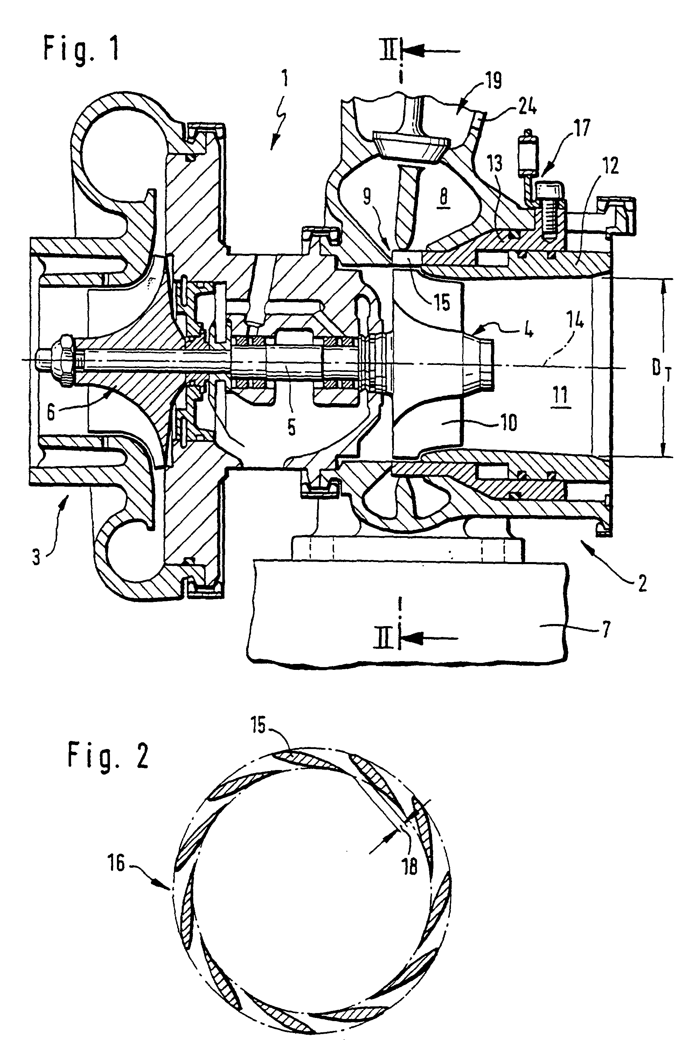

In den Schemadarstellungen gemäß Figuren 1 und 2 ist mit 1 der Turbolader bezeichnet, der einen Turbinenteil 2 und einen Verdichterteil 3 umfaßt, wobei das Turbinenrad 4 über eine Welle 5 das Verdichterrad 6 antreibt. Der Turbolader 1 ist dem in seinen Umrissen angedeuteten Motor 7 zugeordnet und die Abgase des Motores 7 fließen vom Motor zunächst in den Strömungskanal 8 des Turbinenteiles 2 ein, der als zweiflutiger Spiralkanal das Turbinenrad 4 umschließt und über einen radialen, ringförmigen Kanal, der eine Ringdüse 9 bildet auf die Schaufeln 10 des Turbinenrades 4 ausmündet, über die die radial zuströmenden Abgase umgelenkt und einem Axialkanal 11 zugeführt werden, der in nicht weiter dargestellter Weise an das Abgassystem der Brennkraftmaschine bzw. des Fahrzeuges angeschlossen ist.

Gleichachsig zur Ringdüse 9, Turbinenrad 4 und Axialkanal 11 ist gegenüber dem den Axialkanal 11 begrenzenden Gehäuse 12 eine rohrförmige Hülse 13 gelagert, die in Richtung der gemeinsamen Achse 14 verschieblich ist und die an ihrem der Ringdüse 9 zugeordneten Ende einen durch Leitschaufeln 15 gebildeten Leitapparat 16 trägt. Der Leitapparat 16 ist durch axiale Verstellung der Hülse 13 - die Verstellmittel 17 sind im Einzelnen nicht weiter dargestellt - aus einer hier nicht gezeigten inaktiven Position, in der der Querschnitt der Ringdüse 9 frei ist, in die in Figur 1 gezeigte Stellung verschiebbar, in der der Leitapparat 16 mit seinen Leitschaufeln 15 im Querschnitt der Ringdüse liegt und dadurch als Sperrvorrichtung deren freien Strömungsquerschnitt wesentlich verengt. Für die über den Strömungskanal 8 zugeführten Abgase bildet der Leitapparat 16 damit eine im Bereich der Ringdüse 9 liegende Drosselstelle mit durch den Leitapparat bestimmten Festquerschnitt, so daß durch Einschieben des Leitapparates 16 in den Bereich der Ringdüse 9 der Zufluß der Abgase aus dem Strömungskanal 8 auf das Turbinenrad 4 gedrosselt werden kann. Dies ist für den Bremsbetrieb vorgesehen, um über den Rückstau der Abgase die Bremsleistung des Motores zu erhöhen, wobei durch die Beschaufelung zusätzlich eine Anströmung des Turbinenrades 4 sichergestellt ist, die eine ausreichende Förderleistung des Verdichters gewährleistet und gleichzeitig auch eine Grunddrehzahl des Turboladers, bei der beim Übergang vom Bremsbetrieb auf den Leistungsbetrieb ein rasches Ansprechen des Turboladers gewährleistet ist.

Figur 2 zeigt, daß die gewählte Lage und Form der Schaufeln 15 eine wesentliche Reduzierung des Strömungsquerschnittes innerhalb der Ringdüse 9 zur Folge hat wobei der von den Schaufeln 15 für das Abgas im Übergang auf die Turbine 4 freigelassene Querschnitt im wesentlichen der Schaufelzahl mal dem radialen Abstand 18 der Schaufeln im Bereich ihrer sich überlappenden Enden entspricht.

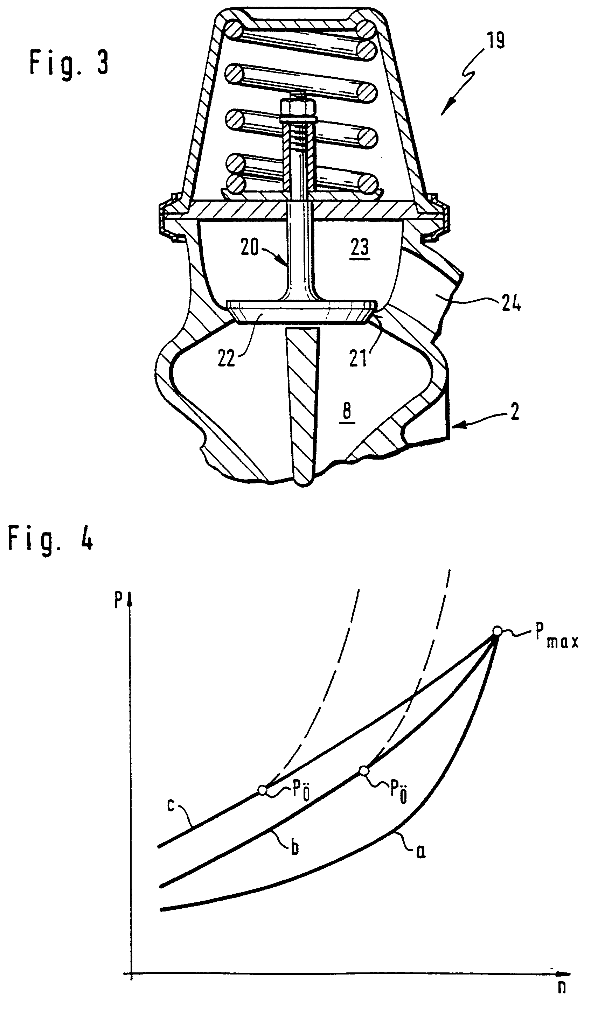

Durch das axiale Einschieben des der Hülse 13 zugeordneten Leitapparates 16 mit den Schaufeln 15 in den Ringraum der Ringdüse 9 wird wie dargelegt, eine Drosselstelle geschaffen. Die dadurch erreichte Drosselung kann, bei entsprechender Ausbildung des Leitapparates, so groß sein, daß mit zunehmendem Abgasstrom bei zunehmender Drehzahl die Brennkraftmaschine 7 zerstört würde. Um dem vorzubeugen und ein Bremsverhalten der Maschine zu erreichen, das für den Praxisbetrieb geeignet ist und das trotz hoher Bremsleistung die thermische Belastung für die Brennkraftmaschine im Bremsbetrieb gering hält ist, wie in Figur 3 beispielhaft gezeigt, dem Strömungskanal 8 ein Abblaseventil 19 zugeordnet, dessen Ventil 20 in Richtung auf seine gezeigte Schließlage belastet ist und in der Schließlage einen Ventilsitz 21 mit seinem Ventilteller 22 abdeckt, der beide Fluten des Strömungskanales 8 anschneidet. Wird das Ventil 20 geöffnet, so kann Abgas aus beiden Fluten des Strömungskanales 8 über den Ventilsitz 21 einem Ventilraum 23 zufließen, der über einen nicht weiter dargestellten Kanal 24 an das Abgassystem der Brennkraftmaschine bzw. des Fahrzeuges angeschlossen ist, so daß über das Abblaseventil 19 bei geöffnetem Ventil 20 ein Bypass für die Abgase des Motores 7 bezogen auf deren Anströmweg zur Turbine geschaffen ist. Dieser Bypass kann abweichend vom gezeigten Ausführungsbeispiel auch auf den abströmseitigen Bereich der Schaufeln des Turbinenrades ausmünden.

Durch die vorliegende Erfindung werden Zusammenhänge zwischen Brennkraftmaschine, Turbolader und erreichbarer Bremsleistung unter der Prämisse möglichst geringer thermischer Belastung für Brennkraftmaschine und Turbolader festgelegt.

Insoweit kommt dem Eintrittsdurchmesser der Abgase auf das Turbinenrad Bedeutung zu, und es ist dieser Eintrittsdurchmesser im Ausführungsbeispiel gemäß Figuren 1 und 2 mit $D_T$ bezeichnet.

Ferner spielt der Strömungsquerschnitt eine Rolle, der bei maximaler Bremsleistung durch die Sperrvorrichtung im Übergang auf das Turbinenrad und das Abblaseventil im Abgasweg zur Turbine freigegeben ist. Dieser setzt sich aus einem Festanteil und einem variablen Anteil zusammen. Der Festanteil ist durch die Sperrvorrichtung, also z.B. die Geometrie des Leitapparates bestimmt, der variable Teil durch den Öffnungsgrad des Abblaseventiles. Die Sperrvorrichtung muß nicht durch einen Leitapparat mit Leitschaufeln gebildet sein, sondern kann beispielsweise auch als Hülse gestaltet sein, die Bohrungen oder Ausschnitte entsprechenden Querschnittes aufweist.

Bei den dargestellten Ausführungsbeispielen erfolgt die Zuströmung auf das Turbinenrad auf einem einheitlichen Durchmesser, da die Ringdüse das Turbinenrad radial umschließt.

Es sind aber auch Lösungen vorstellbar und bekannt, bei denen entsprechend der Zweiflutigkeit des Strömungskanales unterschiedliche Anströmwege gegeben sind, so daß die "Ringdüse" beispielsweise einen radialen und einen halbaxialen Kanalteil umfaßt. Für diese Kanalteile sind dann unterschiedliche Eintrittsdurchmesser auf das Turbinenrad gegeben, und es kann in Anwendung der erfindungsgemäßen Lehre dann zweckmäßig sein, eine Gewichtung der Querschnittsanteile unter Berücksichtigung des jeweiligen Eintrittsdurchmessers zur Bildung eines gemittelten Eintrittsdurchmessers $D_T$ vorzunehmen.

Der Zusammenhang, der erfindungsgemäß gegeben ist, und der zu einem Brennkraftmaschinen-Turbolader-System führt, bei dem für den Bremsbetrieb hohe Bremsleistungen mit relativ geringen thermischen Belastungen verbunden sind, stellt sich wie folgt dar:

$$TBF = A_T \times \frac{D_T}{V_H},$$

wobei TBF einen Turbo-Brems-Faktor bildet, der kleiner 0,005 ist, und der bevorzugt zwischen 0,001 und 0,003, insbesondere bei 0,002 liegt. Mit $V_H$ ist das GesamtVolumen der Brennkraftmaschine bezeichnet.

Angesprochen ist bereits, daß der bei maximaler Bremsleistung durch Sperrvorrichtung und Abblaseventil freigegebene Strömungsquerschnitt im Abgasweg zur Turbine quasi einen Festanteil umfaßt, der durch die Sperrvorrichtung bedingt ist, und einen variablen Anteil, der von dem Grad der Öffnung des Abblaseventiles abhängt. Bezogen auf die maximale Bremsleistung. ist also der freie Strömungsquerschnitt im Abgasweg zur Turbine wie folgt festgelegt:

$$A_T = A_D + dA_{V,max},$$

wobei $A_D$ der durch die als Festdrossel eingesetzte Sperrvorrichtung freigelassene Querschnitt im Übergang zwischen Strömungskanal 8 und Turbinenrad ist, während mit $dA_{V,max}$ der bei maximaler Bremsleistung vom Abblaseventil freigegebene variable Querschnittsanteil bezeichnet ist. Das Verhältnis VF von $dA_{V,max}$ zu $A_D$ ist bevorzugt größer 0,2, und es liegt insbesondere im Bereich zwischen 0,2 und 0,1, wobei diese mit VF bezeichnete Verhältniszahl um so größer zu wählen ist, je höher die Bremsleistung schon bei niedrigen Motordrehzahlen sein soll.

Figur 4 veranschaulicht dies in einem schematisierten Diagramm, in dem die Bremsleistung P über der Motordrehzahl N aufgetragen ist, wobei die Kurve a die Verhältnisse in Bezug auf ein Brennkraftmaschinen-Turbolader-System beschreibt, bei dem über den gesamten Drehzahlbereich der Strömungsquerschnitt im Abgasweg zur Turbine gleich groß gehalten ist, im Praktischen also ein Fall, bei dem bezogen auf das Ausführungsbeispiel gemäß Figuren 1 und 2 im Bremsbetrieb nur mit der Sperrvorrichtung gearbeitet würde und ein Abblaseventil nicht vorhanden wäre. Der Kurvenzug b schneidet sich mit dem Kurvenzug a im Auslegungspunkt $P_{max}$ auf maximale Bremsleistung, liegt aber über dem Kurvenzug a und veranschaulicht eine Maschinenauslegung, bei der im niedrigen Motordrehzahlbereich schon eine höhere Bremsleistung angestrebt ist, und bei der somit, bezogen auf eine analoge Maschinenkonfiguration und gleiche Abgasmengen, im unteren Drehzahlbereich ein kleinerer Strömungsquerschnitt im Abgasweg zur Turbine gegeben sein muß. Dieser Auslegung mit kleinerem Strömungsquerschnitt im unteren Drehzahlbereich entspricht eine Vergrößerung des variablen Querschnittsanteils für den oberen Drehzahlbereich, da ansonsten die maximale Bremsleistung bei einem niedrigerem Motordrehzahlniveau erreicht werden würde. Der Beginn der Öffnung des Abblaseventils ist bei $P_Ö$ angedeutet; ohne Zuschalten des variablen Abströmquerschnittes $dA_V$ ergäbe sich, von $P_Ö$ ausgehend, der strichlierte, steilere Kurvenverlauf.

Der Kurvenzug c stellt eine weitere Variante mit noch höherer Bremsleistung im unteren Drehzahlbereich dar, und gleiche Grundauslegung der Maschine unterstellt muß der variable Anteil des Strömungsquerschnittes für den oberen Drehzahlbereich größer sein als im Falle b, wenn die maximale Bremsleistung $P_{max}$ bei der gleichen Motordrehzahl erreicht werden soll. Auch hier ist, analog zum Kurvenzug b, der Zuschaltpunkt für den variablen Anteil, also der Zuschaltpunkt für das Abblaseventil mit $P_Ö$ bezeichnet, wobei das Abblaseventil vom Zuschaltpunkt an bis zum $P_{max}$ immer weiter aufgemacht wird.

Die Zuschaltung des variablen Abströmquerschnittes $dA_V$ erfolgt also mit zunehmendem variablen Anteil am Gesamtöffnungsquerschnitt bzw. höher liegender Bremsleistung im unteren Drehzahlbereich bevorzugt jeweils bei niedrigeren Drehzahlen, um eine gleichmäßige Steigerung der Bremsleistung über der Motordrehzahl zu gewährleisten.

In Bezug auf das Brennkraftmaschinen-Turbolader-System wird die maximale Bremsleistung zweckmäßigerweise in einem Motordrehzahlbereich erreicht, der oberhalb des Bereiches der Nenndrehzahl des Motores, also der Drehzahl des Motores bei maximaler Leistung liegt. Liegt die Nenndrehzahl bei 1800 Umdrehungen, so kann die Motordrehzahl bei maximaler Bremsleistung beispielsweise im Bereich von 2300 Umdrehungen pro Minute liegen, wobei dies eine bevorzugte Auslegung darstellt. Der obere Drehzahlbereich, in dem ein zusätzlicher, variabler, mit der Drehzahl wachsender Abströmquerschnitt freigegeben ist, beginnt zweckmäßigerweise etwa bei 2/3 bis 3/4 der bei maximaler Bremsleistung gegebenen Drehzahl, wobei die Größe des variablen Querschnittanteils bevorzugt kontinuierlich drehzahlabhängig bis zum Erreichen der maximalen Bremsleistung anwächst, die den Bezugspunkt für die vorstehend erläuterte Auslegung des Systemes auf maximale Bremsleistung bei möglichst geringer thermischer Belastung bildet.

**Patentansprüche**

1. Brennkraftmaschinen-Turbolader-System, bei dem die Brennkraftmaschine mit zumindest einem volumenveränderlichen Brennraum versehen ist und ein durch die Summe der Differenzvolumina zwischen kleinstem und größtem Volumen der Brennräume einer Brennkraftmaschine bestimmtes Brennkraftmaschinen-Hubvolumen aufweist, und bei dem das der Brennkraftmaschine zugeordnete Turbolader-System zumindest eine im Abgasweg der Brennkraftmaschine angeordnete Turbine mit einem Strömungskanal aufweist, der über einen ringdüsenförmigen Bereich auf ein Turbinenrad ausmündet, in dessen Mündungsquerschnitt für den Bremsbetrieb eine Sperrvorrichtung einbringbar ist, über die als Festdrossel der Strömungsquerschnitt im Übergang auf das Turbinenrad bestimmbar ist,
   **dadurch gekennzeichnet,**
   **daß** im Abgasweg zur Turbine zusätzlich ein Abblaseventil vorgesehen ist, das bezüglich seines Öffnungsquerschnittes steuerbar ist und daß, bezogen auf den Bremsbetrieb bei maximaler Bremsleistung der Brennkraftmaschine,

   - der bei maximaler Bremsleistung durch Sperrvorrichtung und Abblaseventil freigegebene Strömungsquerschnitt $A_T$ im Abgasweg zur Turbine,
   - der Eintrittsdurchmesser $D_T$ des Turbinenrades,
   - das Hubvolumen $V_H$ der Brennkraftmaschine in folgender Beziehung zueinander stehen:

   $$TBF = A_T \times \frac{D_T}{V_H},$$

   wobei TBF als Turbo-Brems-Faktor kleiner 0,005 (5 ‰) ist.

2. Brennkraftmaschinen-Turbolader-System nach Anspruch 1,
   **dadurch gekennzeichnet,**
   **daß** der Turbo-Brems-Faktor TBF zwischen 0,001 und 0,003 (1-3 ‰) liegt.

3. Brennkraftmaschinen-Turbolader-System nach Anspruch 2,
   **dadurch gekennzeichnet,**
   **daß** der Turbo-Brems-Faktor TBF bei 0,002 (2 ‰) liegt.

4. Brennkraftmaschinen-Turbolader-System nach einem der Ansprüche 1 bis 3,
   **dadurch gekennzeichnet,**
   **daß** für den bei maximaler Bremsleistung gegebenen freien Strömungsquerschnitt $A_T$ im Abgasweg zur Turbine gilt:

$$A_T = A_D + dA_{V,max},$$

wobei

$A_D$ der von der Sperrvorrichtung bei geschlossenem Abblaseventil freigegebene Strömungsquerschnitt im Übergang auf das Turbinenrad und
$dA_{V,max}$ der zusätzlich durch das Abblaseventil bei maximaler Bremsleistung freigegebene Abströmquerschnitt ist.

5. Brennkraftmaschinen-Turbolader-System nach Anspruch 4,
   **dadurch gekennzeichnet,**
   **daß** für das Verhältnis VF des von der Sperrvorrichtung bei geschlossenem Abblaseventil freigegebenen Strömungsquerschnittes $A_D$ im Übergang auf das Turbinenrad zu dem zusätzlichen, bei maximaler Bremsleitung vom Abblaseventil freigegebenen Abströmquerschnitt $dA_{V,max}$ gilt:

$$VF = \frac{dA_{V,max}}{A_D} > 0,2$$

6. Brennkraftmaschinen-Turbolader-System nach Anspruch 5,
   **dadurch gekennzeichnet,**
   **daß** der zusätzlich bei maximaler Bremsleistung freigegebene Abströmquerschnitt $dA_{V,max}$ des Abblaseventils der obere Grenzwert ist, den der Abströmquerschnitt $dA_V$ innerhalb eines Abströmquerschnittsbereiches im Abgasweg zur Turbine annehmen kann.

7. Brennkraftmaschinen-Turbolader-System nach Anspruch 6,
   **dadurch gekennzeichnet,**
   **daß** der variable Abströmquerschnitt $dA_V$ drehzahlabhängig veränderlich ist.

8. Brennkraftmaschinen-Turbolader-System nach Anspruch 7,
   **dadurch gekennzeichnet,**
   **daß** der variable Abströmquerschnitt $dA_V$ mit abnehmender Drehzahl kleiner wird.

9. Brennkraftmaschinen-Turbolader-System nach einem der Ansprüche 6 bis 8,
   **dadurch gekennzeichnet,**
   **daß** der Abströmquerschnittsbereich einem oberen Bereich eines Drehzahlbandes zugeordnet, das bis zu der der maximalen Bremsleistung entsprechenden Drehzahl reicht.

**10.** Brennkraftmaschinen-Turbolader-System nach Anspruch 9,
**dadurch gekennzeichnet,**
**daß** die maximale Bremsleistung bei einer Drehzahl gegeben ist, die über der Nenndrehzahl der Brennkraftmaschine liegt.

**11.** Brennkraftmaschinen-Turbolader-System nach einem der Ansprüche 9 oder 10,
**dadurch gekennzeichnet,**
**daß** der obere Drehzahlbereich, in dem ein zusätzlicher, variabler Abströmquerschnitt $dA_V$ freigegeben ist, bei etwa 2/3 bis 3/4 der bei maximaler Bremsleistung gegebenen Drehzahl beginnt.

**12.** Brennkraftmaschinen-Turbolader-System nach einem der vorhergehenden Ansprüche,
**dadurch gekennzeichnet,**
**daß** die maximale Bremsleistung bei einer Drehzahl gegeben ist, die etwa 1/4 bis 1/3 größer ist als die bei Nennleistung der Brennkraftmaschine gegebene Nenndrehzahl.

**13.** Brennkraftmaschinen-Turbolader-System nach einem der vorhergehenden Ansprüche,
**dadurch gekennzeichnet,**
**daß** die Sperrvorrichtung durch einen Leitapparat mit für den Bremsbetrieb feststehender Beschaufelung gebildet ist.

**14.** Brennkraftmaschinen-Turbolader-System nach einem der Ansprüche 1 bis 12,
**dadurch gekennzeichnet,**
**daß** die Sperrvorrichtung durch eine den Querschnitt der Ringdüse im Bremsbetrieb zumindest im wesentlichen abdeckende Hülse gebildet ist.

**15.** Brennkraftmaschinen-Turbolader-System nach Anspruch 14,
**dadurch gekennzeichnet,**
**daß** die Sperrvorrichtung als mit Bohrungen oder Ausschnitten versehende Hülse ausgebildet ist.

## Claims

**1.** Combustion engine - turbocharger system, in which the combustion engine is provided with at least one variable-volume combustion chamber and has a combustion engine stroke volume determined by the sum of the differential volume between the smallest and largest volumes of the combustion chambers of a combustion engine, and in which the turbocharger system associated with the combustion engine comprises a turbine arranged in the exhaust gas path of the combustion engine, with a flow channel which opens via an annular nozzle area onto a turbine wheel, into whose aperture cross-section, for braking operation, a blocking device can be brought, by means of which, acting as a fixed throttle, the flow cross-section in the transition zone to the turbine wheel can be determined,
**characterised in that**
in the exhaust gas path to the turbine an exhaust valve is additionally provided, whose opening cross-section can be controlled, and in relation to braking operation at maximum braking performance of the combustion engine,

- the flow cross-section $A_T$ in the exhaust gas path to the turbine left open at maximum braking performance by the blocking device and the exhaust valve,
- the inlet diameter $D_T$ of the turbine wheel, and
- the stroke volume $V_H$ of the combustion engine stand in the following relationship to one another:

$$TBF = A_T \times D_T/V_H$$

where TBF, the turbo-braking factor, is smaller than 0.005 (5‰).

**2.** Combustion engine - turbocharger system according to Claim 1,
**characterised in that**
the turbo-braking factor TBF is between 0.001 and 0.003 (1 - 3‰o).

**3.** Combustion engine - turbocharger system according to Claim 2,
**characterised in that**
the turbo-braking factor TBF is 0.002 (2‰).

**4.** Combustion engine - turbocharger system according to Claims 1 to 3,
**characterised in that**
the free flow cross-section $A_T$ in the exhaust gas path to the turbine at maximum braking performance is given by:

$$A_T = A_D + dA_{V.max}$$

where $A_D$ is the flow cross-section opened by the blocking device when the exhaust valve is closed in the transition zone to the turbine wheel, and $dA_{V.max}$ is the additional outflow cross-section opened by the exhaust valve at maximum braking performance.

**5.** Combustion engine - turbocharger system according to Claim 4,

**characterised in that**
the ratio VF between the flow cross-section $A_D$ opened by the blocking device when the exhaust valve in the transition zone to the turbine wheel is closed and the additional outflow cross-section $dA_{V.max}$ opened by the exhaust valve at maximum braking performance, is given by:

$$VF = dA_{V.max}/A_D > 0.2$$

6. Combustion engine - turbocharger system according to Claim 5,
   **characterised in that**
   the additional outflow cross-section $dA_{V.max}$ opened by the exhaust valve at maximum braking performance, is the upper limiting value that the outflow cross-section $dA_V$ in the exhaust gas path to the turbine can assume within a range of outflow cross-sections.

7. Combustion engine - turbocharger system according to Claim 6,
   **characterised in that**
   the variable outflow cross-section $dA_V$ can be varied as a function of the engine speed.

8. Combustion engine - turbocharger system according to Claim 7,
   **characterised in that**
   the variable outflow cross-section $dA_V$ becomes smaller as the engine speed decreases.

9. Combustion engine - turbocharger system according to Claims 6 to 8,
   **characterised in that**
   the outflow cross-section range is associated with an upper zone of an engine speed band that extends to the engine speed that corresponds to the maximum braking performance.

10. Combustion engine - turbocharger system according to Claim 9,
    **characterised in that**
    the maximum braking performance occurs at an engine speed which is above the nominal engine speed of the combustion engine.

11. Combustion engine - turbocharger system according to either of Claims 9 or 10,
    **characterised in that**
    the upper engine speed range in which an additional, variable outflow cross-section $dA_V$ is opened, begins at about 2/3 to 3/4 of the engine speed at maximum braking performance.

12. Combustion engine - turbocharger system according to any of the preceding claims, .

**characterised in that**
the maximum braking performance occurs at an engine speed which is about 1/4 to 1/3 higher than the nominal engine speed at the nominal performance of the combustion engine.

13. Combustion engine - turbocharger system according to any of the preceding claims,
    **characterised in that**
    the blocking device is formed by a diffuser with fixed blades for braking operation.

14. Combustion engine - turbocharger system according to any of Claims 1 to 12,
    **characterised in that**
    the blocking device is formed by a sleeve which at least essentially covers the cross-section of the ring nozzle in braking operation.

15. Combustion engine - turbocharger system according to Claim 14,
    **characterised in that**
    the blocking device is formed as a sleeve provided with holes or cut-outs.

**Revendications**

1. Système turbocompresseur pour moteurs à combustion interne, dans lequel le moteur à combustion interne est pourvu d'au moins une chambre de combustion de volume variable et présente une cylindrée déterminée par la somme des volumes différentiels entre le volume minimum et le volume maximum des chambres de combustion d'un moteur à combustion interne, et dans lequel le système turbocompresseur associé au moteur à combustion interne comprend au moins une turbine qui est agencée dans le circuit des gaz d'échappement du moteur à combustion interne et qui présente un canal d'écoulement débouchant via une zone en forme de buse annulaire sur un rotor de turbine, dans la section d'embouchure duquel peut venir se poser un dispositif d'obturation pour le fonctionnement en frein moteur, au moyen duquel la section d'écoulement dans la transition vers le rotor peut être déterminée à titre d'étranglement fixe, **caractérisé en ce que** dans le circuit des gaz d'échappement vers la turbine est prévue une soupape de décharge supplémentaire qui peut être commandée à l'égard de sa section d'ouverture, et **en ce que**, en relation au fonctionnement en frein moteur avec la puissance de freinage maximale du moteur à combustion interne,

   - la section d'écoulement $A_T$ libérée par le dispositif d'obturation et par la soupape de décharge dans le circuit de gaz d'échappement vers la turbine lors de la puissance de freinage maximale,

- le diamètre d'entrée $D_T$ du rotor de turbine, et
- la cylindrée $V_H$ du moteur à combustion interne,

satisfont la relation suivante les uns par rapport aux autres :

$$TBF = A_T \times [D_T/V_H]$$

TBF en tant que "facteur turbo-frein" étant inférieur à 0,005 (5 ‰).

2. Système turbocompresseur pour moteurs à combustion interne selon la revendication 1, **caractérisé en ce que** le facteur turbo-frein TBF est compris entre 0,001 et 0,003 (1 à 3 ‰).

3. Système turbocompresseur pour moteurs à combustion interne selon la revendication 2, **caractérisé en ce que** le facteur turbo-frein TBF est de l'ordre de 0,002 (2 ‰).

4. Système turbocompresseur pour moteurs à combustion interné selon l'une des revendications 1 à 3, **caractérisé en ce que** pour la section d'écoulement libre $A_T$ donnée lors de la puissance de freinage maximale dans le circuit des gaz d'échappement vers la turbine, la relation suivante est satisfaite :

$$A_T = A_D + dA_{V.max.}$$

dans laquelle :

$A_D$ est la section d'écoulement libérée par le dispositif d'obturation lorsque la soupape de décharge est fermée, dans la transition vers le rotor de turbine, et

$dA_{V.max.}$ est la section d'évacuation libérée en supplément par la soupape de décharge lors de la puissance de freinage maximale.

5. Système turbocompresseur pour moteurs à combustion interne selon la revendication 4, **caractérisé en ce que** le rapport VF entre la section d'écoulement $A_D$ libérée par le dispositif d'obturation lorsque la soupape de décharge est fermée, dans la transition vers le rotor de turbine, et la section de décharge supplémentaire $dA_{V.max.}$ libérée par la soupape de décharge lors d'une puissance de freinage maximale, satisfait la relation suivante :

$$VF = [dA_{V.max}/A_D] > 0,2.$$

6. Système turbocompresseur pour moteurs à combustion interne selon la revendication 5, **caractérisé en ce que** la section d'évacuation $dA_{V.max.}$ de la soupape de décharge, libérée en supplément lors d'une puissance de freinage maximale, est la valeur limite supérieure que peut prendre la section d'évacuation $dA_V$ à l'intérieur d'une plage de section d'évacuation dans le circuit des gaz d'échappement vers la turbine.

7. Système turbocompresseur pour moteurs à combustion interne selon la revendication 6, **caractérisé en ce que** la section d'évacuation variable $dA_V$ peut être modifiée en fonction de la vitesse de rotation.

8. Système turbocompresseur pour moteurs à combustion interne selon la revendication 7, **caractérisé en ce que** la section d'évacuation variable $dA_V$ diminue lorsque la vitesse de rotation diminue.

9. Système turbocompresseur pour moteurs à combustion interne selon l'une des revendications 6 à 8, **caractérisé en ce que** la plage de section d'évacuation est associée à une plage supérieure d'une bande de vitesse de rotation qui va jusqu'à la vitesse de rotation correspondante à la puissance de freinage maximale.

10. Système turbocompresseur pour moteurs à combustion interne selon la revendication 9, **caractérisé en ce que** la puissance de freinage maximale est donnée à une vitesse de rotation qui est supérieure à la vitesse de rotation nominale du moteur à combustion interne.

11. Système turbocompresseur pour moteurs à combustion interne selon l'une ou l'autre des revendications 9 et 10, **caractérisé en ce que** la plage de vitesse de rotation supérieure dans laquelle une section d'évacuation variable supplémentaire $dA_V$ est libérée commence approximativement à une valeur entre 2/3 et 3/4 de la vitesse de rotation donnée lors de la puissance de freinage maximale.

12. Système turbocompresseur pour moteurs à combustion interne selon l'une des revendications précédentes, **caractérisé en ce que** la puissance de freinage maximale est donnée à une vitesse de rotation qui est supérieure d'environ 1/4 à 1/3 à la vitesse de rotation nominale donnée lors de la puissance nominale du moteur à combustion interne.

13. Système turbocompresseur pour moteurs à combustion interne selon l'une des revendications précédentes, **caractérisé en ce que** le dispositif d'obturation est formé par un distributeur à disposition d'aubes fixe pour le fonctionnement en frein moteur.

**14.** Système turbocompresseur pour moteurs à combustion interne selon l'une des revendications 1 à 12, **caractérisé en ce que** le dispositif d'obturation est formé par une douille qui recouvre au moins sensiblement la section de la buse annulaire pendant le fonctionnement en frein moteur.

**15.** Système turbocompresseur pour moteurs à combustion interne selon la revendication 14, **caractérisé en ce que** le dispositif d'obturation est réalisé sous la forme d'une douille pourvue de perçages ou d'échancrures.

Fig. 1

Fig. 2

Fig. 3

Fig. 4